# EUROPÄISCHE PATENTSCHRIFT

(11) **EP 0 588 264 B1**
(45) Veröffentlichungstag und Bekanntmachung des Hinweises auf die Patenterteilung: **24.04.1996**
(21) Anmeldenummer: 93114597.3
(22) Anmeldetag: 10.09.1993
(51) Int. Cl.: B60R 22/46

(54) **Sicherheitsgurtanordnung für Fahrzeuge**
Seat belt arrangement for cars
Disposition de ceinture de sécurité pour véhicules automobiles

(30) Priorität: 14.09.1992 DE 4230665
(43) Veröffentlichungstag der Anmeldung: 23.03.1994
(73) Patentinhaber: TAKATA (EUROPE) VEHICLE SAFETY TECHNOLOGY GmbH, D-89081 Ulm (DE)
(72) Erfinder: Kopetzky, Robert, D-73557 Mutlangen (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- EP-A- 0 173 903
- EP-A- 0 261 006
- DE-A- 4 136 622

## Beschreibung

Die vorliegende Erfindung betrifft eine Sicherheitsgurtanordnung, insbesondere für Fahrzeuge, mit zumindest einem an wenigstens zwei und vorzugsweise drei Punkten am Chassis des Fahrzeugs befestigten Gurt, der mindestens an einem der Befestigungspunkte über ein Verbindungselement vorzugsweise ein Gurtschloß mit einem am Chassis befestigten Straffermechanismus verbunden ist, welcher zumindest einen Beschleunigungssensor, eine Energiequelle, eine Antriebseinheit und ein Zugorgan umfaßt, wobei die Energiequelle mittels des Beschleunigungssensors aktivierbar ist und bei Aktivierung das Verbindungselement über das mit der Antriebseinheit verbundene Zugorgan, insbesondere ein Seil oder einen Bowdenzug, schlagartig aus seiner Ausgangslage zur Straffung des Gurtes wegbewegt.

Sicherheitsgurtanordnungen mit Straffermechanismen dieser Art werden zunehmend in Kraftfahrzeugen eingesetzt, da dadurch eine Erhöhung der Sicherheit für die Fahrzeuginsassen erreicht wird. Da der Gurt aus Komfortgründen insbesondere beim Tragen von voluminösen Kleidungsstücken nur locker am Körper eines Fahrzeuginsassen anliegt, wird bei einem Unfall der Körper zunächst, ohne vom Sicherheitsgurt gehalten zu werden, nach vorne schnellen, bis der Gurt sich strafft und die Auffangwirkung des Sicherheitsgurtes einsetzt.

Dies kann zu erheblichen Verletzungen der Fahrzeuginsassen führen, so daß heutzutage immer häufiger Gurtstraffermechanismen eingesetzt werden, um bei einem Unfall ein korrektes Anliegen der Sicherheitsgurte am Körper der Fahrzeuginsassen so schnell herbeizuführen, daß der Insasse von Anfang an sicher gehalten wird.

Ublicherweise wird als Verbindungselement das Gurtschloß des Sicherheitsgurtes verwendet. Dieses wird im Falle eines Unfalls in Richtung zum Chassis hin gezogen, wodurch der Sicherheitsgurt straff am Körper des Fahrzeuginsassen zur Anlage kommt. Dazu ist üblicherweise das Gurtschloß über ein Zugorgan mit einer Antriebseinheit verbunden, die über eine Energiequelle so antreibbar ist, daß das Gurtschloß über das Zugorgan in gewünschter Weise bewegt wird. Die Energiequelle wird dabei üblicherweise durch einen Beschleunigungssensor aktiviert, der auf Beschleunigungswerte wie sie typischerweise bei Unfällen auftreten anspricht.

Da im Innenraum von Fahrzeugen für die Insassen möglichst viel Platz zur Verfügung stehen soll und insbesondere in der Umgebung der Gurtschlösser üblicherweise sehr wenig freier Raum vorhanden ist, ist es sinnvoll, den Straffermechanismus an einem, von den Gurtschlössern entfernten Ort zu installieren, an dem sich die Anbringung nicht störend auf den Platzbedarf im Innenraum auswirkt. So kann der Straffermechanismus beispielsweise unter der Rücksitzbank montiert werden, wobei das Zugorgan, das die Antriebseinheit mit dem Gurtschloß verbindet, von der Rücksitzbank am Chassisboden entlang quer durch den Innenraum zum Gurtschloß verlegt werden muß.

Der Straffermechanismus kann jedoch auch noch weiter nach hinten verlegt werden, beispielsweise in Richtung unterhalb des Kofferraums, um somit auf keinen Fall das Platzangebot im Fahrzeuginnenraum zu beeinträchtigen.

Diese relativ weit entfernte Anbringung des Straffermechanismus von den Gurtschlössern führt dazu, daß die Zugorgane zum einen über lange Strecken im Fahrzeug verlegt werden müssen und zum anderen dabei oft stark gekrümmt geführt werden müssen. Diese langen Verlegungswege bzw. starken Krümmungen führen zu hohen Reibungen an den Zugorganen und damit zu einer Beeinträchtigung der einwandfreien Funktionsfähigkeit der Straffermechanismen.

Aufgabe der Erfindung ist es eine Sicherheitsgurtanordnung mit Straffermechanismus anzugeben, bei der auch eine Anbringung des Straffermechanismus an einem weit vom Gurt entfernt gelegenen Ort zu keiner Beeinträchtigung der Strafferfunktion führt.

Gelöst wird diese Aufgabe nach der Erfindung dadurch, daß das Zugorgan Bestandteil eines Flaschenzuges ist, der einerseits am Verbindungselement und andererseits am Chassis befestigt ist.

Insbesondere soll vorgesehen sein, daß an dem Verbindungselement zumindest eine Umlenkvorrichtung für das Zugorgan angeordnet ist, durch welche das dem Verbindungselement zugewandte Endstück des Zugorgans bevorzugt um etwa 180° umgelenkt wird, und daß das umgelenkte Endstück des Zugorgans mit dem Chassis in Verbindung steht.

Durch die Anwendung des Flaschenzugprinzips können die Kräfte, denen das Zugorgan bei der Aktivierung der Energiequelle ausgesetzt sind, reduziert werden. Beispielsweise wird die Kraft, die auf das Zugorgan wirkt, bei Verwendung einer Umlenkrolle halbiert. Durch diese Kraftverminderung können die Zugorgane für geringere Kräfte ausgelegt und damit dünner ausgebildet werden, so daß eine höhere Flexibilität der Zugorgane erreicht werden kann. Diese höhere Flexibilität ist gerade bei langen Verlegungswegen von Vorteil, da die Zugorgane dadurch besser, insbesondere auch mit stärkeren Krümmungen im Fahrzeug verlegt werden können, wobei ein einwandfreies Funktionieren des Straffermechanismus gewährleistet bleibt.

Nach einer bevorzugten Ausführungsform der Erfindung ist das Verbindungselement als Gurtschloß ausgebildet, das zum Chassis hin verschiebbar ist. Durch die Bewegung des Gurtschlosses in Richtung zum Fahrzeugchassis werden gleichzeitig, bei einer Dreipunkt-Gurtanordnung, beide am Körper des Fahrzeuginsassen anliegende Gurtteile gestrafft, ohne daß das Gurtband in einer Umlenkeinheit verschoben werden muß. Es ist jedoch prinzipiell möglich, jedes der Befestigungsteile, mit denen der Gurt am Fahrzeugchassis angreift, als Verbindungselement einer erfindungsgemäßen Sicherheitsgurtanordnung zu verwenden.

Nach einer weiteren vorteilhaften Ausführungsform der Erfindung ist an dem Verbindungselement als Umlenkvorrichtung eine Umlenkrolle drehbar gelagert, an der das Zugorgan im wesentlichen in einem Winkel von 180° anliegt. Dadurch ist eine besonders reibungsfreie Bewegung des Zugorgans um die Umlenkvorrichtung herum gegeben. Die Umlenkvorrichtung kann aber auch fest am Verbindungselement befestigt sein, so daß das Zugorgan schleifend um die Umlenkvorrichtung herum geführt wird.

Nach einer weiteren vorteilhaften Ausführungsform ist nur eine Umlenkvorrichtung am Verbindungselement vorgesehen. Das Zugorgan ist genau einmal um die Umlenkvorrichtung geführt und mit seinem freien Ende am Chassis befestigt. Auf diese Weise erhält man, bei gleicher Kraft am Gurtschloß, eine Halbierung der am Zugorgan angreifenden Kraft, so daß die Zugorgane entsprechend nur halb so dick dimensioniert werden müssen. Weiterhin ist eine sehr einfache Ausbildung der Umlenkvorrichtung gegeben, die dem beengten Platzbedarf Rechnung trägt. Ist jedoch eine höhere Kraftuntersetzung nötig, so kann auch am Chassis zumindest eine weitere Umlenkvorrichtung vorgesehen sein. Das Zugorgan kann mehrmals um die beiden Umlenkvorrichtung oder um weitere am Verbindungselement oder am Chassis vorgesehene Umlenkvorrichtungen geführt sein, bis eine ausreichende Kraftuntersetzung erreicht ist.

Nach einer weiteren bevorzugten Ausführungsform umfaßt die Antriebseinheit zumindest einen Zylinderraum und einen im Zylinderraum durch die Energiequelle verschiebbaren Kolben. Dadurch wird eine schmale Bauweise der Antriebseinheit ermöglicht, die sich damit günstig an bestimmten Positionen am Fahrzeugchassis unterbringen läßt. Weiterhin ist durch die Zylinder-Kolben-Anordnung eine robuste und einfache Ausführungsform der Antriebseinheit gegeben. Es ist jedoch prinzipiell beispielsweise auch ein Drehmechanismus denkbar, wobei das Zugorgan zur Bewegung des Verbindungselements aufgerollt wird. Bevorzugt ist das Zugorgan direkt mit dem Kolben verbunden. Dadurch ist ebenfalls ein einfacher Aufbau ohne zusätzliche Umsetzvorrichtungen möglich, so daß eine sichere Funktionsfähigkeit und eine robuste Ausführung der Antriebseinheit gegeben ist.

Nach einer weiteren bevorzugten Ausführungsform der Erfindung ist als Energiequelle eine pyrotechnische Ladung vorgesehen, die in Verbindung mit dem Zylinderraum steht. Die Verwendung einer pyrotechnischen Ladung als Energiequelle ist besonders vorteilhaft, da damit die durch die Kraftuntersetzung entstehende Verlängerung des Kolbenhubes der Antriebseinheit unproblematisch ist. Der bei der Aktivierung der pyrotechnischen Ladung entstehende Impuls ist in der Regel so groß, daß auch dieser längere Verschiebeweg des Kolbens in ausreichend kurzer Zeit durchlaufen wird.

Es können jedoch auch andere Energiequellen verwendet werden, wie beispielsweise ein Federelement, das direkt oder indirekt so am Kolben angreift, daß bei Entspannen des Federelements der Kolben im Zylinderraum verschoben wird. Gerade bei Verwendung einer Feder als Energiequelle kann eine Untersetzung der benötigten Kraft von Vorteil sein, da eine sehr hohe Kraft von einer Feder nicht ohne weiteres zur Verfügung gestellt werden kann.

Bevorzugt beträgt die auf das Verbindungselement wirkende Kraft maximal zwischen 10 kN und 30 kN, insbesondere zwischen 15 kN und 25 kN, bevorzugt 20 kN.

Weitere vorteilhafte Ausführungsformen sind in den Unteransprüchen angegeben.

Der Vorteil einer erfindungsgemäß ausgebildeten Sicherheitsgurtanordnung mit Gurtstraffmechanismus liegt darin, daß durch die Herabsetzung der auf das Zugorgan wirkenden Kraft dieses Zugorgan dünner und damit flexibler ausgebildet sein kann. Durch diese erhöhte Flexibilität ist auch bei einer Verlegung der Zugorgane auf langen Wegen und mit starken Krümmungen eine sichere Funktion der Sicherheitsgurtanordnung mit Straffermechanismus gewährleistet; zwar ist mit der Kraftuntersetzung eine Wegvergrößerung verbunden, welches jedoch durch etwas längere Ausbildung der Antriebseinheit leicht beherrscht werden kann.

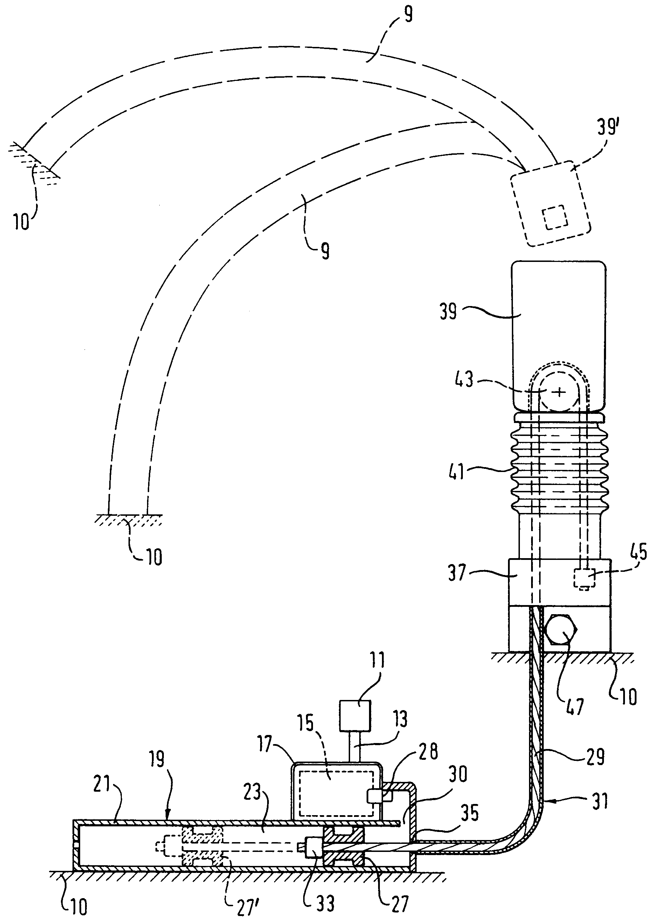

Die Erfindung wird nachfolgend anhand eines Ausführungsbeispiels unter Bezugnahme auf die Zeichnung erläutert; Figur 1 der Zeichnung zeigt einen Teilschnitt durch eine Sicherheitsgurtanordnung mit Straffermechanismus, die entsprechend der Erfindung ausgebildet ist.

Der in der Figur dargestellte Straffermechanismus umfaßt einen Beschleunigungssensor 11, der über eine Steuerleitung 13 mit einem eine Energiequelle 15, insbesondere eine pyrotechnische Ladung enthaltenden Raum 17 verbunden ist.

Der Raum 17 ist an einer Antriebseinheit 19 angeordnet, die eine Zylinder-Kolben-Anordnung mit einem am Chassis 10 befestigten zylindrischen Gehäuse 21 und einem in einem Zylinderraum 23 verschiebbar angebrachten Kolben 27 umfaßt.

Der Kolben 27 ist dabei für ein besseres Verständnis der Funktionsweise in einer Ausgangsposition mit durchgezogenen Linien und in einer zweiten, von der Ausgangsstellung verschobenen Position 27' gestrichelt dargestellt.

Das Innere des die Energiequelle 15 enthaltenden Raumes 17 steht mit dem Zylinderraum 23 über Öffnung 28, 30 in Verbindung.

Durch den Kolben 27 ist ein Ende einer Seele 29 eines Bowdenzugs 31 hindurchgeführt und über ein Endstück 33 mit dem Kolben 27 verbunden. Die Seele 29 tritt durch eine abgedichtete Öffnung 35 aus dem zylindrischen Gehäuse 21 aus, an dem das eine Ende des Mantels des Bowdenzuges 31 abgestützt ist.

Das andere Ende des Mantels des Bowdenzuges 31 ist an dem Befestigungselement 37 eines Gurtschlosses 39 abgestützt, das über eine Schraube 47 am Chassis 10 des Fahrzeug befestigt ist. Das Gurtschloß 39 steht mit dem Befestigungselement 37 über eine Federmanschette 41 in Verbindung.

Das freie Ende der Seele 29 ist um eine Umlenkrolle 43, die am Gurtschloß 39 befestigt ist, über einen Winkel von 180° geführt und mit ihrem freien Ende mit einem Fixierelement 45 an dem am Chassis 10 befestigten Befestigungselement 37 fixiert.

Das Gurtschloß 39 ist auf diese Weise mit der Antriebseinheit 19 nach dem Flaschenzugprinzip verbunden.

In das Gurtschloß 39 ist ein gestrichelt angedeutetes Riegelstück 39' einschiebbar, welches über zwei Gurte 9 mit geeigneten Stellen des Chassis 10 verbunden ist.

Registriert der Beschleunigungssensor 11 einen, für einen Unfall typischen Beschleunigungswert, so aktiviert er über die Steuerleitung 13 die im Raum 17 enthaltene Energiequelle 15.

Der durch die Explosion der pyrotechnischen Ladung 15 entstehende Druck dringt durch die Öffnungen 28 und 30 in den Zylinderraum 23 ein und beaufschlagt die rechte Seitenfläche des in der Ausgangsstellung dargestellten Kolbens 27. Durch den Druck wird der Kolben 27 schlagartig nach links in Richtung der dargestellten Position 27' verschoben, wobei die am Kolben 27 befestigte Seele 29 des Bowdenzugs 31 ebenfalls nach links bewegt wird.

Durch diese Verschiebung der Seele 29 wird das Gurtschloß 39 mit dem eingesteckten Riegelstück 39' zum Befestigungselement 37 hin bewegt, wobei die Federmanschette 41 zusammengedrückt wird. Der vom Gurtschloß 39 zurückgelegte Weg ist dabei halb so groß wie der Weg, um den der Kolben 27 verschoben wird. Aufgrund der Umlenkung der Seele 29 um die Umlenkvorrichtung 43 ist die Kraft, die auf die Seele 29 wirkt, halb so groß wie die Kraft, die auf das Gurtschloß 39 einwirkt. Durch diese Kraft werden die Gurte 9 gestrafft, so daß sie ausreichend eng am Körper des Fahrzeuginsassen anliegen.

Aufgrund der Halbierung der benötigten, am Bowdenzug 31 anliegenden Kraft kann dieser dünner und damit flexibler ausgestaltet werden, als es ohne Umlenkvorrichtung 43 der Fall wäre. Durch die höhere Flexibilität ist eine Verlegung von Bowdenzügen 31 über lange Wegstrecken und insbesondere in engen Krümmungen möglich, ohne die Funktionsfähigkeit einer erfindungsgemäß ausgebildeten Sicherheitsgurtanordnung zu beeinträchtigen.

## Patentansprüche

1. Sicherheitsgurtanordnung, insbesondere für Fahrzeuge, mit zumindest einem an wenigstens zwei und vorzugsweise drei Punkten am Chassis (10) des Fahrzeugs befestigten Gurt (9), der mindestens an einem der Befestigungspunkte über ein Verbindungselement (39, 39') vorzugsweise ein Gurtschloß mit einem am Chassis (10) befestigten Straffermechanismus verbunden ist, welcher zumindest einen Beschleunigungssensor (11), eine Energiequelle (15), eine Antriebseinheit (19) und ein Zugorgan (31) umfaßt, wobei die Energiequelle (15) mittels des Beschleunigungssensors (11) aktivierbar ist und bei Aktivierung das Verbindungselement (39, 39') über das mit der Antriebseinheit (19) verbundene Zugorgan (31), insbesondere ein Seil oder einen Bowdenzug, schlagartig aus seiner Ausgangslage zur Straffung des Gurtes (9) wegbewegt,
dadurch **gekennzeichnet,**
daß das Zugorgan (31) Bestandteil eines Flaschenzuges ist, der einerseits am Verbindungselement (39, 39') und andererseits am Chassis (10) befestigt ist.

2. Sicherheitsgurtanordnung nach Anspruch 1,
dadurch **gekennzeichnet,**
daß an dem Verbindungselement (39) zumindest eine Umlenkvorrichtung (43) für das Zugorgan (31) angeordnet ist, durch welche das dem Verbindungselement (39) zugewandte Endstück des Zugorgans (31) bevorzugt um etwa 180° umgelenkt wird, und daß das umgelenkte Endstück des Zugorgans (31) mit dem Chassis (10) in Verbindung steht.

3. Sicherheitsgurtanordnung nach Anspruch 1,
dadurch **gekennzeichnet,**
daß an dem Verbindungselement (39) als Umlenkvorrichtung eine Umlenkrolle (43) drehbar gelagert ist, an der das Zugorgan (31) im wesentlichen über einen Winkel von 180° anliegt.

4. Sicherheitsgurtanordnung nach einem der vorhergehenden Ansprüche,
dadurch **gekennzeichnet,**
daß nur eine Umlenkvorrichtung (43) am Verbindungselement (39, 39') vorgesehen ist.

5. Sicherheitsgurtanordnung nach einem oder mehreren der vorhergehenden Ansprüche,
dadurch **gekennzeichnet,**
daß die Antriebseinheit (19) zumindest einen Zylinderraum (23) und einen im Zylinderraum (23) durch die Energiequelle (15) verschiebbaren Kolben (27) umfaßt.

6. Sicherheitsgurtanordnung nach Anspruch 5,
dadurch **gekennzeichnet,**
daß das Zugorgan (31) mit dem Kolben (27) verbunden ist.

7. Sicherheitsgurtanordnung nach Ansprüche 5 oder 6,
dadurch **gekennzeichnet,**
daß als Energiequelle (15) eine pyrotechnische Ladung vorgesehen ist, die in Verbindung mit dem Zylinderraum (23) steht.

8. Sicherheitsgurtanordnung nach einem oder mehreren der Ansprüche 5, 6,
dadurch **gekennzeichnet,**
daß als Energiequelle (15) ein Federelement vorgesehen ist, das direkt oder indirekt so am Kolben (27) angreift, daß bei Entspannen des Federelements der Kolben (27) im Zylinderraum (23) verschoben wird.

9. Sicherheitsgurtanordnung nach einem oder mehreren der vorhergehenden Ansprüche,
dadurch **gekennzeichnet,**
daß die auf das Verbindungselement (39) wirkende Kraft maximal zwischen 10 kN und 30kN, insbesondere zwischen 15 kN und 25 kN, bevorzugt 20 kN beträgt.

## Claims

1. Safety belt arrangement, in particular for vehicles, with at least one belt (9) fastened to the chassis (10) of the vehicle at least at two and preferably at three points, which is connected at least at one of the fastening points via a connection element (39, 39'), preferably a belt lock, to a tensioner mechanism fastened to the chassis (10), wherein said tensioner mechanism comprises at least one acceleration sensor (11), an energy source (15), a drive unit (19) and a draw member (31), with the energy source (15) being actuatable by means of an acceleration sensor (11) and, upon actuation, abruptly moving the connection element (39, 39') away from its initial position for the purpose of tensioning the belt (9) via the draw member (31), in particular a cable or a Bowden cable, connected to the drive unit (19),
**characterized** in that
the draw member (31) is a component of a pulley arrangement which is fastened at the one end to the connection element (39, 39') and at the other end to the chassis (10).

2. Safety belt arrangement in accordance with claim 1
**characterized** in that
at least one deflection device (43) for the draw member (31) is placed at the connection element (39) and deflects the end piece of the draw member (31) towards the connection element (39), through preferably about 180°; and in that the deflected end piece of the draw member (31) stands in connection with the chassis (10).

3. Safety belt arrangement in accordance with claim 1
**characterized** in that
a deflection roller (43) is rotatably mounted at the connection element (39) as a deflection device with which the draw member (31) essentially lies in contact over an angle of 180°.

4. Safety belt arrangment in accordance with one of the preceding claims
**characterized** in that
only one deflection device (43) is provided at the connection element (39, 39').

5. Safety belt arrangment in accordance with one or more of the preceding claims
**characterized** in that
the drive unit (19) comprises at least one cylinder space (23) and one piston (27) displaceable within the cylinder space (23) by the energy source (15).

6. Safety belt arrangement in accordance with claim 5
**characterized** in that
the draw member (31) is connected to the piston (27).

7. Safety belt arrangement in accordance with claims 5 or 6
**characterized** in that
a pyrotechnic charge is provided as the energy source (15) and is connected to the cylinder space (23).

8. Safety belt arrangement in accordance with one or more of the claims 5, 6
**characterized** in that
a spring element is provided as the energy source (15) which directly or indirectly engages the piston (27) in such a manner that upon relaxation of the spring element the piston (27) is displaced within the cylinder space (23).

9. Safety belt arrangement in accordance with one or more of the preceding claims
**characterized** in that
the force acting on the connection element (39) has a maximum value lying between 10 kN and 30 kN, in particular between 15 kN and 25 kN, and preferably amounts to 20 kN.

## Revendications

1. Agencement à ceinture de sécurité, en particulier pour véhicule, comprenant au moins une ceinture (9) fixée au châssis (10) du véhicule en au moins deux points et de préférence trois points, ladite ceinture étant reliée à l'un au moins des points de fixation par l'intermédiaire d'un élément de liaison (39, 39'), de préférence un verrou de ceinture avec un mécanisme de tensionnement fixé au châssis (10), ledit mécanisme de tensionnement comprenant au moins un détecteur d'accélération (11), une source d'énergie (15), une unité d'entraînement (19) et un organe de traction (31), la source d'énergie (15) étant susceptible d'être activée au moyen du détecteur d'accélération (11) et, en cas d'activation, l'élément de liaison (39, 39') est déplacé via l'organe de traction (31) relié à l'unité d'entrâinement (19), en particulier un câble ou un câble Bowden, de façon brutale depuis sa position de départ afin de tendre la ceinture (9), caractérisé en ce que l'organe de traction (31) fait partie d'un système à palan qui est fixé d'une part sur l'élément de liaison (39, 39') et d'autre part au châssis (10).

2. Agencement à ceinture de sécurité selon la revendication 1, caractérisé en ce que sur l'élément de liaison (39) est agencé au moins un dispositif de renvoi (43) pour l'organe de traction (31), au moyen duquel la pièce terminale de l'organe de traction (31) dirigée vers l'élément de liaison (39) est déviée de préférence d'environ 180°, et en ce que la pièce terminale déviée de l'organe de traction (31) est reliée au châssis (10).

3. Agencement à ceinture de sécurité selon la revendication 1, caractérisé en ce que sur l'élément de liaison (39) est monté en rotation un galet de renvoi (43) en tant que dispositif de renvoi, contre lequel est appliqué l'organe de traction (31) sensiblement sur un angle de 180°.

4. Agencement à ceinture de sécurité selon l'une des revendications précédentes, caractérisé en ce qu'il est prévu uniquement un dispositif de renvoi (43) sur l'élément don liaison (39, 39').

5. Agencement à ceinture de sécurité selon l'une ou plusieurs des revendications précédentes, caractérisé en ce que l'unité d'entraînement (19) comprend au moins une chambre cylindrique (23) et un piston (27) susceptible d'être déplacé dans la chambre cylindrique (23) par la source d'énergie (15).

6. Agencement à ceinture de sécurité selon la revendication 5, caractérisé en ce que l'organe de traction (31) est relié au piston (27).

7. Agencement à ceinture de sécurité selon l'une ou l'autre des revendications 5 et 6, caractérisé en ce qu'on prévoit comme source d'énergie (15) une charge pyrotechnique qui est en liaison avec la chambre cylindrique (23).

8. Agencement à ceinture de sécurité selon l'une ou plusieurs des revendications 5, 6, caractérisé en ce qu'on prévoit comme source d'énergie (15) un élément à ressort qui attaque directement ou indirectement le piston (27) de telle manière que lors de la détente de l'élément à ressort, le piston (27) est déplacé dans la chambre cylindrique (23).

9. Agencement à ceinture de sécurité selon l'une ou plusieurs des revendications précédentes, caractérisé en ce que la force qui agit sur l'élément de liaison (39) s'élève au maximum entre 10 kN et 30 kN, en particulier entre 15 kN et 25 kN, de préférence 20 kN.
